# EUROPEAN PATENT SPECIFICATION

(11) **EP 1 622 394 B1**
(45) Date of publication and mention of the grant of the patent: **06.06.2007**
(21) Application number: 05015654.6
(22) Date of filing: 19.07.2005
(51) Int. Cl.: H04N 13/00, G02B 27/26

(54) **Liquid crystal display device having thin polarizing film and thin phase retardation film**
Flüssigkristallanzeigegerät mit dünner Polarisationsfolie und dünner Phasenverzögerungsfolie
Dispositif d'affichage à cristaux liquides à film mince de polarisation et film mince retardateur de phase

(30) Priority: 27.07.2004 KR 2004058837; 14.06.2005 KR 2005050994
(43) Date of publication of application: 01.02.2006
(73) Proprietor: Pavonine Inc., Incheon (KR)
(72) Inventor: Lee, Sung-Jung, Uwang-si, Kyunggi-do (KR)
(74) Representative: Leson, Thomas Johannes Alois

(56) References cited:
- US-B1- 6 400 394
- US-B1- 6 593 959
- PATENT ABSTRACTS OF JAPAN vol. 2003, no. 12, 5 December 2003 (2003-12-05) & JP 2004 198727 A (SHARP CORP), 15 July 2004 (2004-07-15)

## Description

### BACKGROUND OF THE INVENTION

### 1. Field of the Invention

The present invention relates to a LCD (Liquid Crystal Display) device having a thin polarizing film and a thin phase retardation film, and in particular to a LCD device having a thin polarizing film and a thin phase retardation film capable of displaying a 2D (dimension) image and a 3D (dimension) image.

### 2. Description of the Background Art

The Korean patent gazette No. 2992-41382 (laid-open date: June 1, 2002) entitled "Liquid crystal shutter for 3D display device" discloses a technique capable of removing Moire interference phenomenon fin a display device that is designed to implement a 3D based on a parallax barrier.

The US patent No. 6,122,103 of US Moxtek Inc. discloses a thin polarizing film manufactured using a thin aluminum film.

The US patent No. 6,813,077 of Corning Inc. discloses a technique of fabricating a thin film of a wire grid with an imprint method. In addition, the US patent Nos. 5,772,905 and 6,900,126 discloses a nano imprint lithography that uses polymer. The US patent No. 6,174,394 of Optiva Ltd. Discloses a polarizing nano material (TCF) fabricated by a technique related with a polarizing nano material thin film. Some companies including Germany Merck company sell liquid crystal material (Reactive Mesogen) related to fabrication of phase retardation film. The US patent No. 5,917,562 (issue date: June 29, 999) entitled "Autostereocopic display and spatial light modulator" that is one of the prior art of the present invention discloses an automatic 3D display apparatus capable of improving an image contrast between a left eye and a right eye.

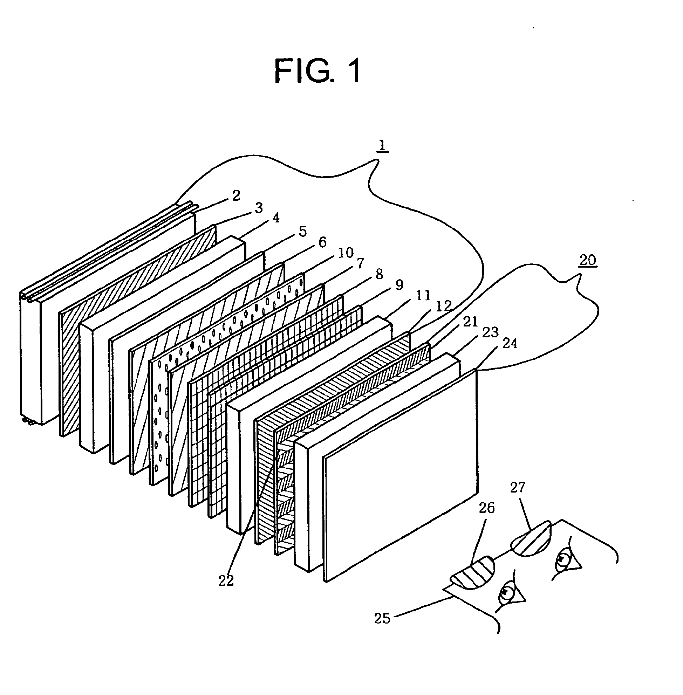

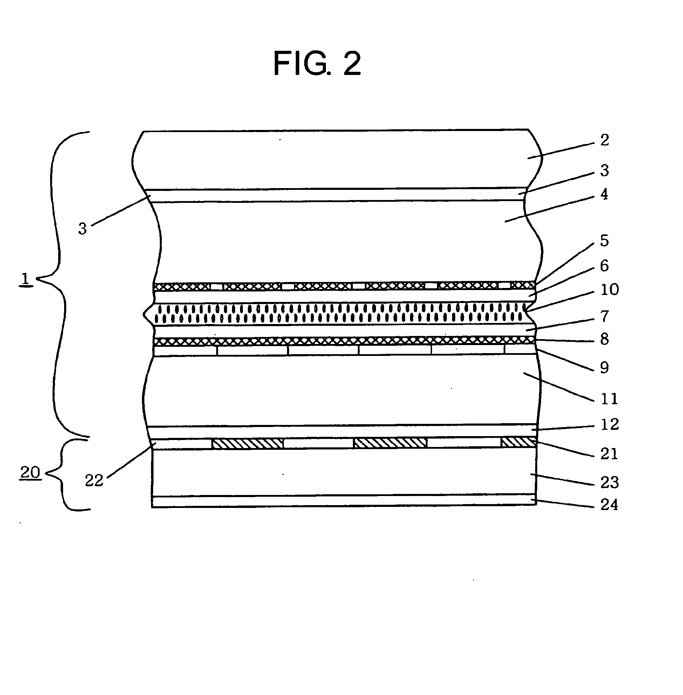

Figure 1 is a view illustrating a conventional 3D display structure, and Figure 2 is a cross sectional view of Figure 1. In the LCD device capable of displaying a 2D image and a 3D image, a first polarizing film 3 is installed at a front side of a backlight unit 2. A first transparent substrate 4 is disposed at a front surface of the first polarizing film 3, and a crystal liquid layer 10 filled with a liquid crystal material is disposed between a first transparent substrate 4 and a second transparent substrate 11.

The second polarizing film 12 having an orthogonal 90° polarizing direction with respect to the first polarizing film 3 is installed at a front surface of the crystal liquid layer 10. A first 1/2 phase retardation film 21 is installed at a front surface of the second polarizing film 3. When a user wears polarizing glasses 25 for left and right eyes having a 90° polarizing direction difference, the user can see a 3D image.

In the conventional LCD device capable of displaying a 3D image of Figure 1, the first 1/2 phase retardation film 21 is installed at a front surface of a 2D image panel. When a user wears polarizing glasses 25 and sees a 3D image, a viewing angle is limited, and a viewing distance is limited. Since the 3D viewing angle is generally less than 16°, it is impossible to view 3D images clearly.

Therefore, a development of a 2D and 3D image display device capable of displaying 2D and 3D images and achieving a simple structure is urgently needed in the industry.

The US-B-6 593 959 discloses a stereoscopic image display apparatus for displaying a three dimensional image on a screen of an LCD panel. The LCD panel includes a backlight, a polarizer, an active matrix, a liquid crystal layer, a color filter, a black matrix, and a micropolarizer. The micropolarizer forms the upper most surface of the LCD panel, and is composed of a plurality of polarizing regions corresponding to the pixels of the screen of the LCD panel. The adjacent polarizing regions have different polarizing directions perpendicular to each other so as to separate the displayed 3D image into the left and right eye images.

In the US-B-6 400 394 a 3D image projection display system for displaying a 3D image on a screen is disclosed which includes a screen, first reflector and second reflector, and a projector, which also includes a 3D video signal processor and a projection system for projecting the 3D image as visible light. The 3D image light projected from the projector is sequentially reflected by the first reflector and the second reflector, and finally projected on the screen. The viewer puts on a pair of polarizing glasses provided with micro polarizers arranged in the two perpendicular directions, the horizontal and vertical polarizing directions, to view the 3D image. The first and second reflectors and can be arranged at proper or appropriate angles with respect to the projector. The number and sizes of the reflectors can be determined according to the size of the screen. Thus, the 3D image projected from the projector can be magnified by several tens of times, for example, over a 40 inch screen. The visible light produced from a light source is reflected on a reflector, focused by a lens. The visible light transmitted through the lens is separated by a dichroic mirror into R, G and B rays made uniform through a filter. The light rays are transferred through a first polarizing plate, a liquid crystal display (LCD) panel and a second polarizing plate. Passing through the LCD panel, the light rays form a 3D image, which is color-mixed through a dichroic mirror, then polarized by a micro polarizer into the left eye and right eye images projected through a lens on the first reflector. Namely, the image light generated from the projector includes the left eye and right eye image light rays polarized in the two perpendicular polarizing directions namely, the horizontal and vertical polarizing directions, for example.

### SUMMARY OF THE INVENTION

Accordingly, it is an object of the present invention to overcome the above-described problems encountered in the conventional art.

It is another object of the present invention to provide a LCD device having a thin polarizing film and a thin phase retardation film capable of displaying a 2D image and a 3D image with a simple structure in such a manner that polarizing films having different polarizing directions are disposed on the same plane, and a simple structure is achieved using a thin phase retardation film.

It is another object of the present invention to provide a LCD device having a thin phase retardation film that is achieved using a thin film polarizing film formed by accurately processing a thin aluminum film, a polarizing film of a nano imprint lithography method that uses polymer, and a polarizing film and a liquid crystal material that form a polarizing nano material thin film by uniformly coating a polarizing nano material (TCF).

To achieve the above objects, in a LCD (Liquid Crystal Display) device in which a first transparent substrate is disposed at a front surface of a backlight unit, and a first polarizing region having a polarizing direction angle of 0° or 45° and a second polarizing region having a polarizing direction angle of 90° or 135° are formed on a surface of the first transparent substrate in an orthogonal structure on the same plane, and a liquid crystal layer is disposed between a first alignment film and a second alignment film, and a second transparent electrode and a color filter are disposed at a front surface of the second alignment film, there is provided a LCD device having a thin polarizing film and a tin phase retardation film characterized in that a first polarizing region having a polarizing direction of 0° or 45° and a second polarizing region having a polarizing direction of 90° or 135° formed on a surface of the first transparent substrate are orthogonal from each other and are aligned on the same plane, and a first insulation layer is stacked on the front surfaces of the first polarizing region and the second polarizing region, and next to that, the first transparent electrode and a first alignment film are disposed at a front surface of the first insulation layer, and a liquid crystal later filled with liquid crystal is aligned between the first and second alignment films, and a second transparent electrode, a color filter and a second insulation layer are sequentially disposed at a front surface of the second alignment film, and a third polarizing region and a fourth polarizing region are formed on the same plane in a structure in which the first polarizing region and the second polarizing region are orthogonal in their polarizing directions at 90°, and next to that the second transparent substrate is disposed, and a non-reflection coating layer is disposed at the front most surface.

In the first embodiment of the present invention, a polarizing film according to the present invention is integrally formed in a first polarizing region and a second polarizing region on a surface of a first transparent substrate of a conventional LCD panel. A liquid crystal layer is disposed between a third polarizing region and a fourth polarizing region integrally formed at a back surface of the second transparent substrate.

Namely, the first polarizing region and the second polarizing region are alternately formed at a surface of the first transparent substrate, and the third polarizing region and the fourth polarizing region are alternately formed at a back surface of the second transparent substrate, and the polarizing region formed at a portion corresponding to the first transparent substrate and the second transparent substrate are arranged to have different polarizing directions.

Here, the first polarizing region has a polarizing direction of 0° or 45°, and the third polarizing region has a polarizing direction of 90° or 135°. The polarizing direction between the first polarizing region and the third polarizing region has an orthogonal angle of 90°. In addition, the polarizing direction between the second polarizing region and the fourth polarizing region has an orthogonal angle of 90°.

In the second embodiment of the present invention, a third polarizing film is formed of a straight line polarizing film on the whole front surfaces of the backlight unit. A second 1/2 phase retardation film and a transparent unit are aligned at a surface of the first transparent substrate with a certain width and distance. Next, a first insulation layer is disposed. A first transparent electrode and a first alignment film are sequentially aligned at a front surface of the same. In addition, a liquid crystal layer, a second alignment film, a second transparent electrode, a color filter and a second insulation layer are sequentially aligned. A transparent substrate integrally formed of a third polarizing region and a fourth polarizing region are aligned at a front surface of the same. A non-reflection coating layer is disposed at a front most surface.

In the third embodiment of the present invention, a 1/4 phase retardation film is disposed for converting an incident light into a circular polarizing light in the structure of the second embodiment of the present invention.

In the fourth embodiment of the present invention, the whole construction is similar with the first embodiment of the present invention. The structure of the polarizing region is aligned in a lattice shape, and a 1/4 phase retardation film is further provided.

In the fifth embodiment of the present invention, the whole construction is similar with the third embodiment of the present invention. Here, the structure of the phase retardation film and the structure of the polarizing region are aligned in a lattice shape.

In the sixth embodiment of the present invention, the polarizing region is formed of a conductive metal differently from the structure of the fourth embodiment of the present invention. In this embodiment, since the polarizing film function and the electrode function are concurrently provided, two transparent electrodes and two insulation layers are not needed before and after the liquid crystal layer differently from the fourth embodiment of the present invention. Therefore, the fabrication process of the LCD device can be decreased, and the fabrication cost is also decreased.

### BRIEF DESCRIPTION OF THE DRAWINGS

The present invention will become better understood with reference to the accompanying drawings which are given only by way of illustration and thus are not limitative of the present invention, wherein;
Figure 1 is a view illustrating a construction of a conventional 3D display;
Figure 2 is a cross sectional view of Figure 1;
Figure 3 is view illustrating a LCD device having a thin polarizing film and a thin phase retardation film according to a first embodiment of the present invention;
Figure 4 is a cross sectional view of Figure 3;
Figure 5 is a detailed view illustrating a polarizing region and an alignment direction used in the present invention;
Figure 6 is a view illustrating a LCD device having a thin polarizing film and a thin phase retardation film according to a second embodiment of the present invention;
Figure 7 is a cross sectional view of Figure 6;
Figure 8 is a view illustrating a LCD device having a thin polarizing film and a thin phase retardation film according to a third embodiment of the present invention;
Figure 9 is a cross sectional view of Figure 8;
Figure 10 is a view illustrating a LCD device having a thin polarizing film and a thin phase retardation film according to a fourth embodiment of the present invention;
Figure 11 is a view illustrating a structure of a polarizing film of Figure 10;
Figure 12 is a view illustrating a LCD device having a thin polarizing film and a thin phase retardation film according to a fifth embodiment of the present invention;
Figure 13 is a cross sectional view of Figure 12;
Figure 14 is a view illustrating a LCD device having a thin polarizing film and a thin phase retardation film according to a sixth embodiment of the present invention;
Figure 15 is a view illustrating a structure of a conductive polarizing film of Figure 14; and
Figure 16 is a cross sectional view of Figure 14.

### DETAILED DESCRIPTION OF THE PREFERRED EMBODIMENTS

The preferred embodiments of the present invention will be described with reference to the accompanying drawings.

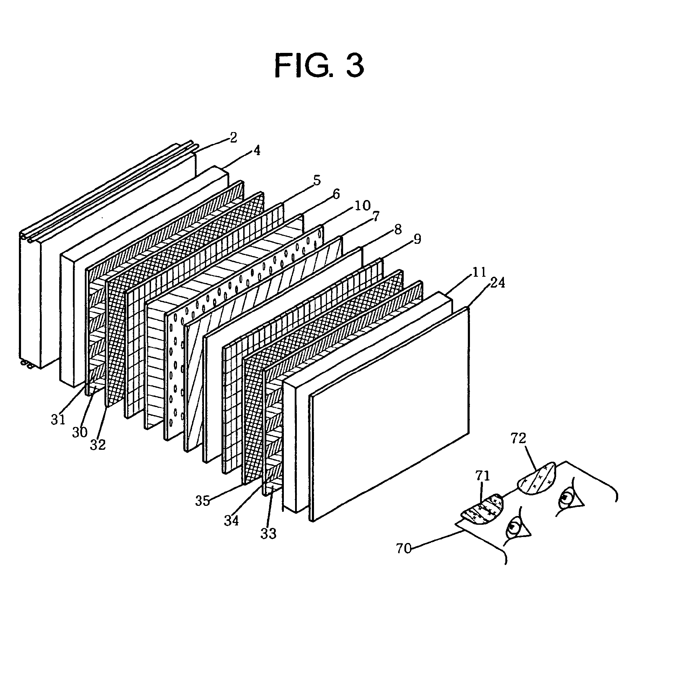

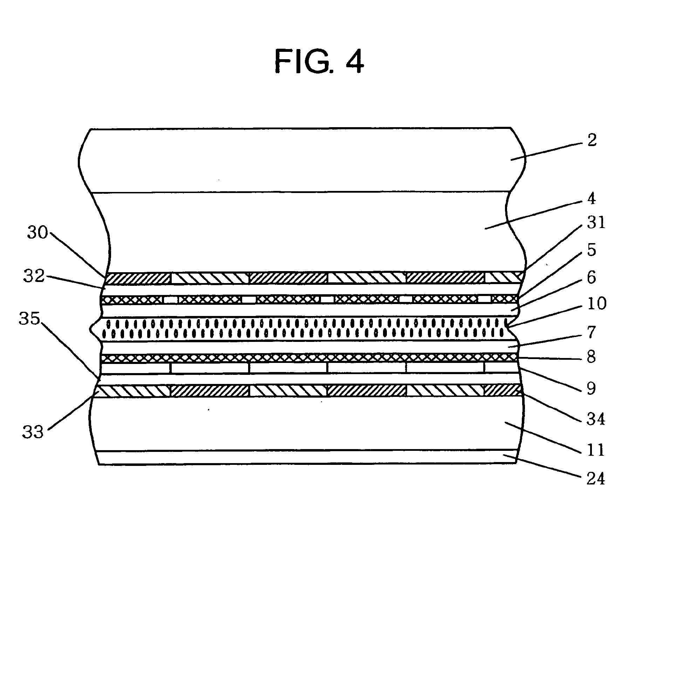

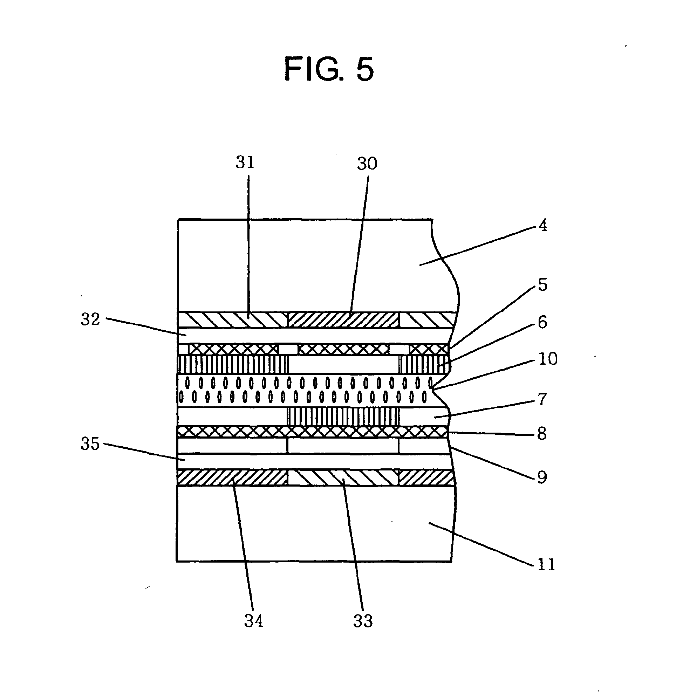

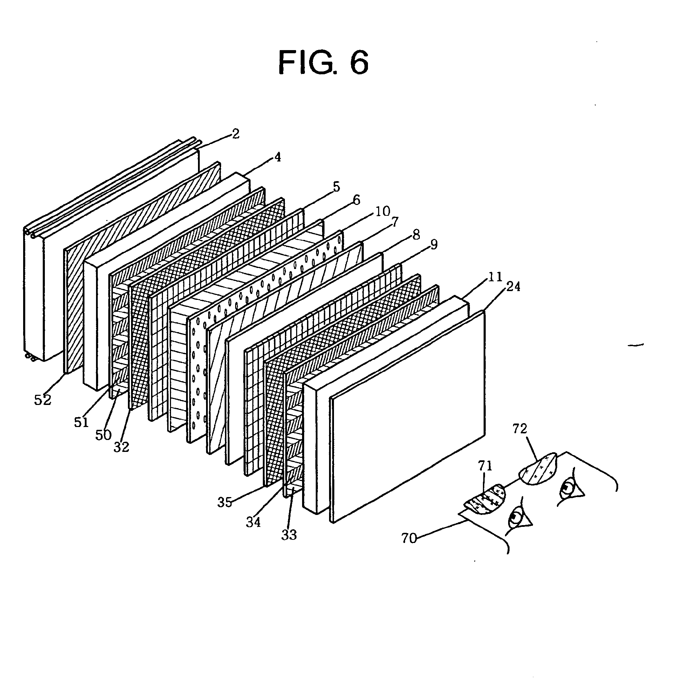

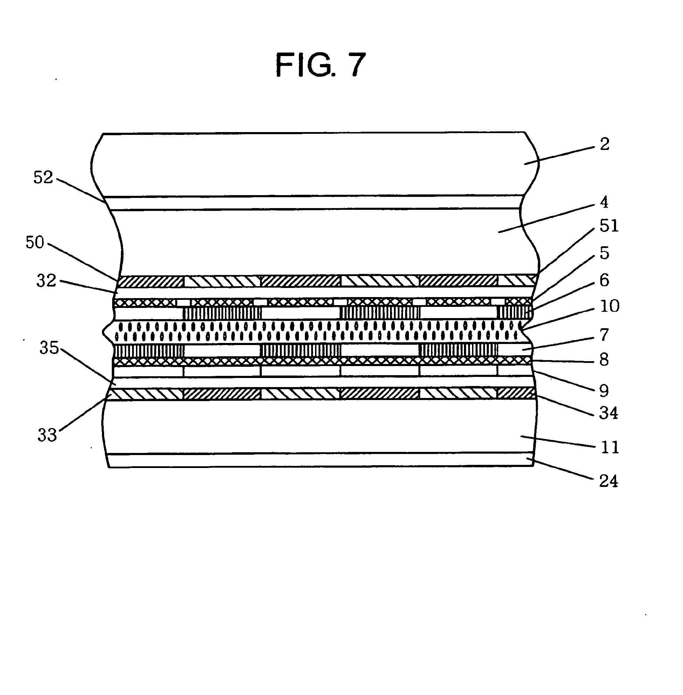

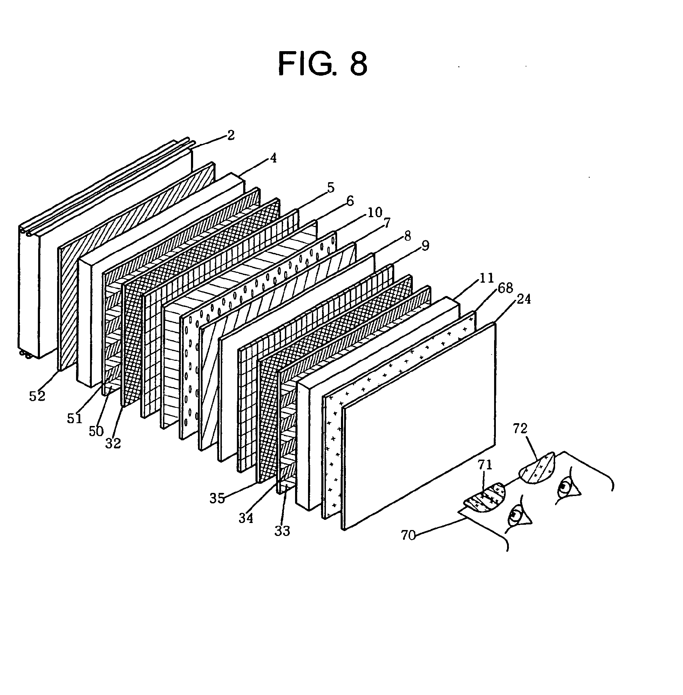

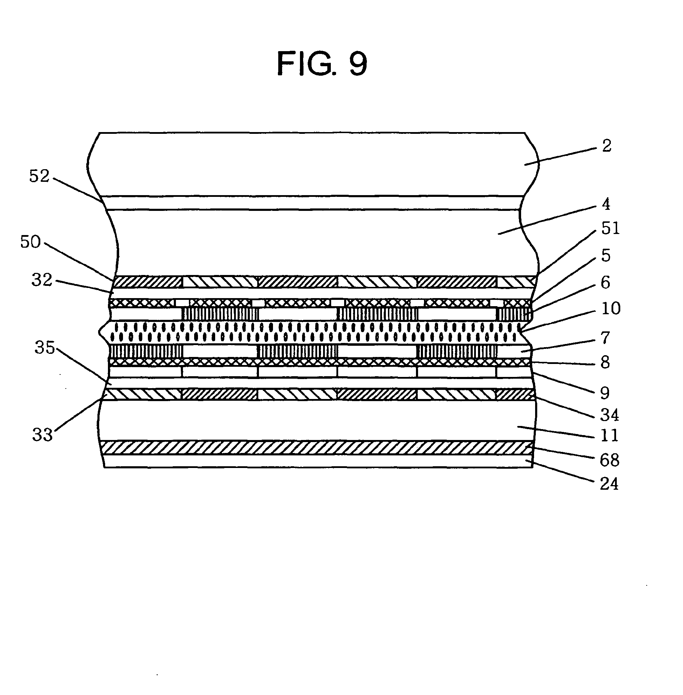

Figure 3 is view illustrating a LCD device having a thin polarizing film and a thin phase retardation film according to a first embodiment of the present invention, Figure 4 is a cross sectional view of Figure 3, Figure 5 is a detailed view illustrating a polarizing region and an alignment direction used in the present invention, Figure 6 is a view illustrating a LCD device having a thin polarizing film and a thin phase retardation film according to a second embodiment of the present invention, Figure 7 is a cross sectional view of Figure 6, Figure 8 is a view illustrating a LCD device having a thin polarizing film and a thin phase retardation film according to a third embodiment of the present invention, and Figure 9 is a cross sectional view of Figure 8.

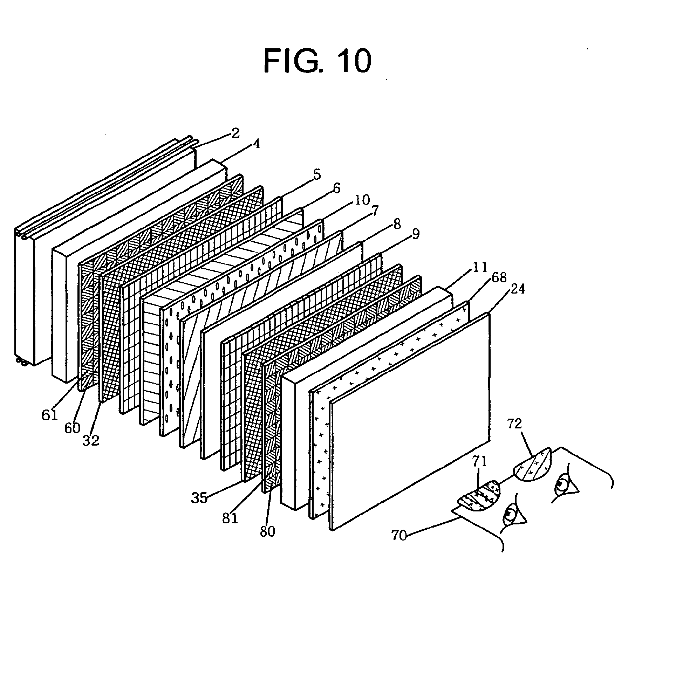

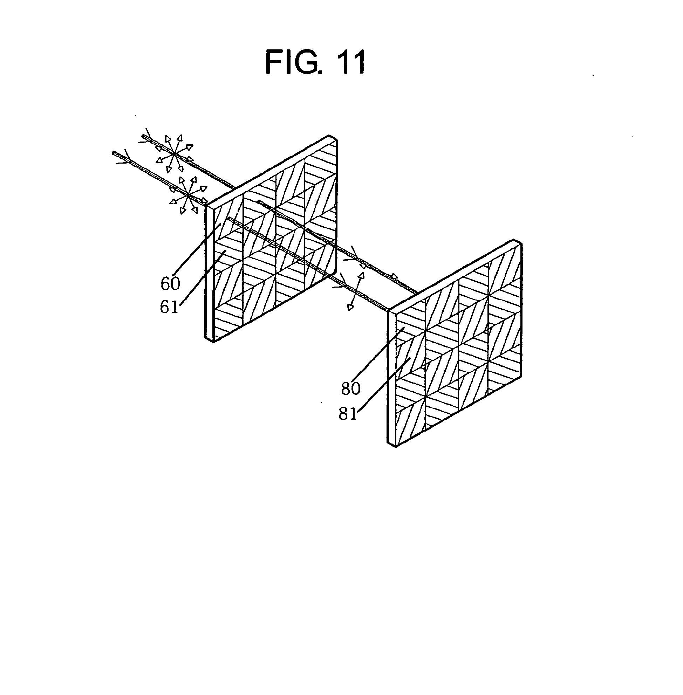

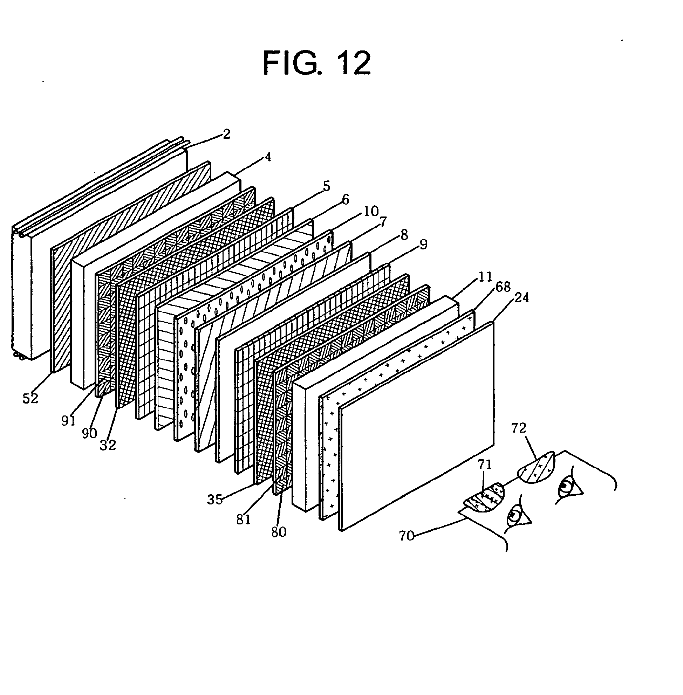

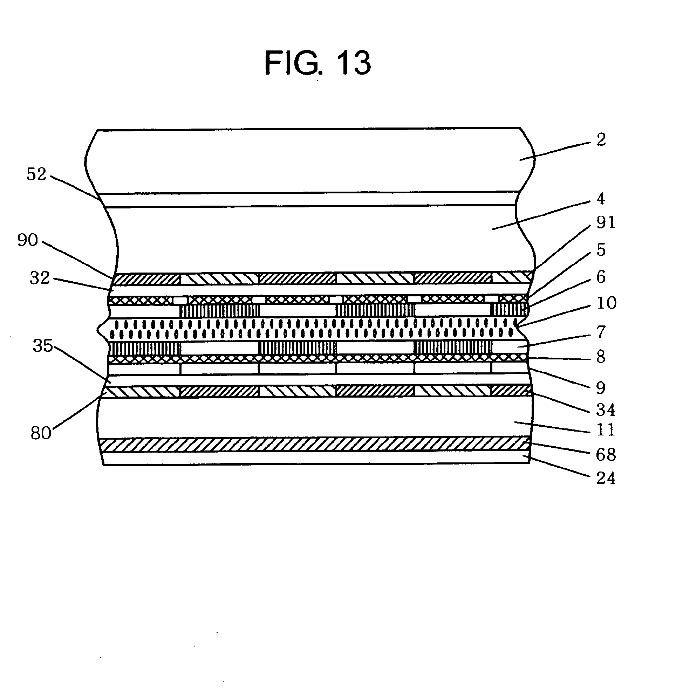

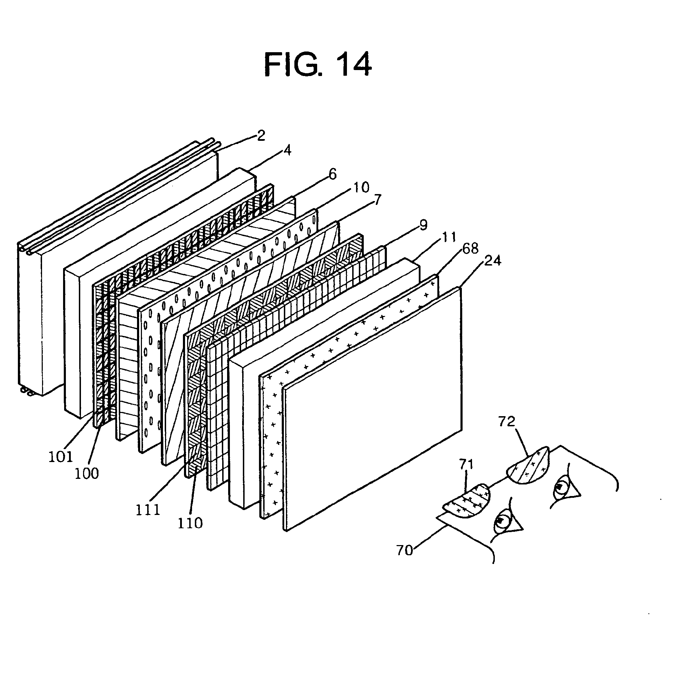

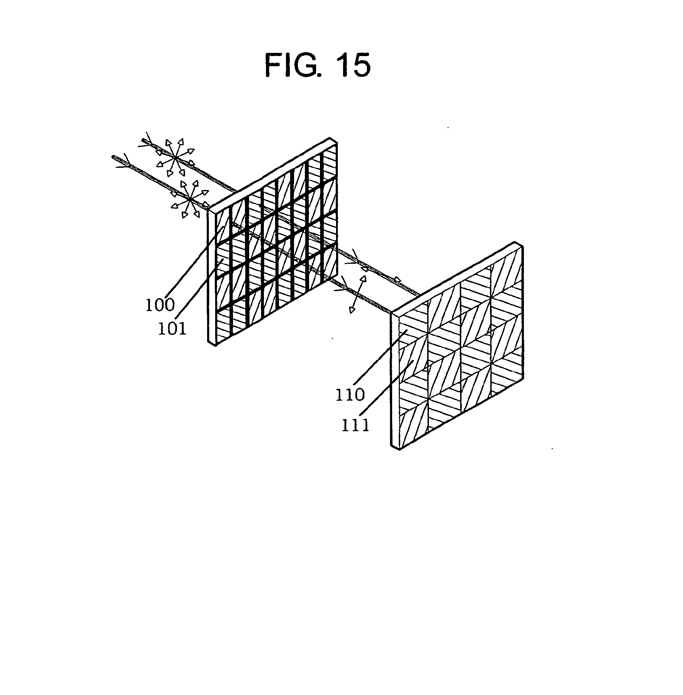

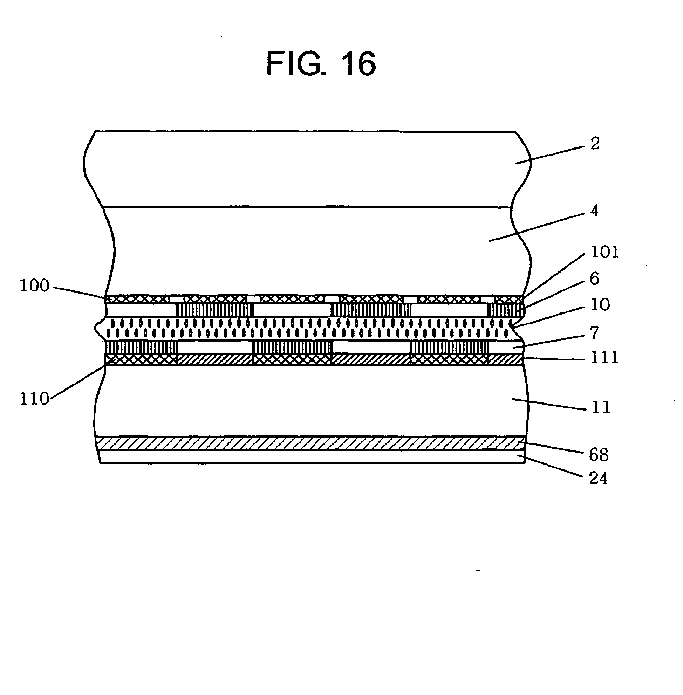

In addition, Figure 10 is a view illustrating a LCD device having a thin polarizing film and a thin phase retardation film according to a fourth embodiment of the present invention, Figure 11 is a view illustrating a structure of a polarizing film of Figure 10, Figure 12 is a view illustrating a LCD device having a thin polarizing film and a thin phase retardation film according to a fifth embodiment of the present invention, Figure 13 is a cross sectional view of Figure 12, Figure 14 is a view illustrating a LCD device having a thin polarizing film and a thin phase retardation film according to a sixth embodiment of the present invention, Figure 15 is a view illustrating a structure of a conductive polarizing film of Figure 14, and Figure 16 is a cross sectional view of Figure 14.

### [First embodiment]

The 2D and 3D LCD device according to a first embodiment of the present invention will be described with reference to Figures 3 and 4. Polarizing regions are given reference numerals of 30, 31, 33, 34, 60, 61, 80 and 81 in order to recognize the regions from a polarizing film because the polarizing directions are orthogonal at 90 ° in a lattice shape on one plane.

As shown in Figures 3 and 4, in the liquid crystal device capable of displaying a 2D image and a 3D image according to the first embodiment of the present invention, a first polarizing region 30 having a polarizing direction of 0° or 45° formed on a plane of the first transparent substrate aligned on a front surface of the backlight unit 2 and a second polarizing region 31 that has a polarizing direction of 90° or 135° are aligned in an orthogonal structure. A first insulation layer 32 is aligned at a front surface of the first polarizing region 30 and the second polarizing region 31. A first transparent electrode 5 and a first alignment film 6 are disposed at the front surface of the same. A liquid crystal layer 10 filled with a liquid crystal is disposed between the first alignment film 6 and the second alignment film 7. Here, the alignment directions of the first alignment film 6 and the second alignment film 7 may be different based on the kinds of liquid crystal.

As shown in Figure 5, it is preferred that the alignment directions of the first alignment film 6 and the second alignment film 7 are vertical at the portions corresponding to the first polarizing region 30 and the second polarizing region 31, but the alignments may be in the same direction depending of the kinds of the liquid crystal. When electromagnetic field is applied to the liquid crystal layer 10, it is moved based on the characteristic of the liquid crystal. Therefore, it is needed to retard transmitting light.

Next, a second transparent electrode 8, a color filter 9 and a second insulation layer 35 are disposed at a front surface of the second alignment film 7. A third polarizing region 33 and a fourth polarizing region 34 are integrally formed at the next front surface in a structure that the polarizing direction is orthogonal at 90° with respect to the first polarizing region 30 and the second polarizing region 31. A non-reflection coating layer 24 is disposed at the front most side.

In the conventional liquid crystal display panel, the polarizing films before and after the liquid crystal layer have the same polarizing direction, and the polarizing directions have 90° difference. In this embodiment of the present invention, the polarizing films are formed like a structure that fine stripes are orthogonal from each other with the polarizing directions being 90° fine stripes are orthogonal on one plane. Namely, the first polarizing region 30 and the second polarizing region 31 are on the front surface of the first transparent substrate 4, and the third polarizing region 33 and the fourth polarizing region 34 are integrally formed at the back side of the second transparent substrate 11. The liquid crystal layer 10 is disposed therebetween.

As shown in Figure 5, the first polarizing region 30 and the second polarizing region 31 are alternately formed on the front surface of the first transparent substrate 4. The third polarizing region 33 and the fourth polarizing region 34 are alternately formed on the backside of the second transparent substrate 11. The polarizing regions formed at the portions corresponding to the first transparent substrate 4 and the second transparent substrate 11 have different polarizing directions.

Here, the first polarizing region 30 has a polarizing direction of 0° or 45°, and the third polarizing region 33 has a polarizing direction of 90° or 135°. The polarizing direction is orthogonal at 90° between the first polarizing region 30 and the third polarizing region 33. The polarizing direction is orthogonal at 90° between the second polarizing region 31 and the fourth polarizing region 34.
The operation of the LCD device according to the first embodiment of the present invention will be described. First, when light transmits the first polarizing region 30 formed at the front surface of the first transparent substrate 40 through the backlight unit 2, the light becomes a straight line polarizing light polarized at 0° or 45°. Since the light becomes a straight line polarizing state having 90° rotated polarizing direction after the light transmitted the liquid crystal layer 10, so that a viewer can view the image transmitted the third polarizing region 33 having a polarizing direction of 90° or 135°.

When the light from the backlight unit 2 transmits the second polarizing region 31 formed at the front surface of the first transparent substrate 4, the light is changed to a straight line polarizing light polarized at an angle of 90° or 135° and is changed to a 90° rotated straight line polarizing light while transmitting the liquid crystal layer 10. Therefore, as the light transmits the fourth polarizing region 34 having a polarizing direction of 0° or 45°, the viewer can view the images.

Therefore, the first polarizing region 30 and the third polarizing region 33 are matched with the pitches of the pixels at the liquid crystal display panel, and the right eye image is displayed at the odd number row at the LCD panel, and the left eye image is displayed on the even number row, so that the right eye image transmits the fourth polarizing region 34, and the left eye image transmits polarizing glasses 25, so that the viewer can see a 3D image.

### [Second embodiment]

The 2D and 3D liquid crystal display device according to the second embodiment of the present invention will be described. Figure 6 is a view of the second embodiment, and Figure 7 is a cross sectional view of Figure 6.
As shown in Figure 6, a part of the LCD device capable of displaying 2D and 3D images according to the second embodiment of the present invention is changed as compared with the first embodiment of the present invention. The above changes will be described in detail.

As shown in Figure 6, in the LCD device capable of displaying 2D and 3D images according to the second embodiment of the present invention, a third polarizing film 52 formed of straight line polarizing films on its entire surface is disposed at the front surface of the backlight unit 2. The second 1/2 phase retardation film 50 and the transparent unit 51 are disposed at the front surface of the first transparent substrate 4 with a certain width and distance. Next, the first insulation layer 32 is disposed, and the first transparent electrode 5 and the first alignment film 6 are formed at the front surface of the same. A liquid crystal layer 10 filled with liquid crystal is disposed between the first alignment 6 and the second alignment film 7. When an electromagnetic field is applied to the liquid crystal layer 10, it is moved based on the characteristic of the liquid crystal, so that it is possible to retard the transmitting light.

Next, the second transparent electrode 8, the color filter 9 and the second insulation layer 35 are sequentially disposed at the front surface of the second alignment film 7. The second transparent substrate 11 integrally formed of the third polarizing region 33 and the fourth polarizing region 34 is disposed at the next front surface. A non-reflection coating layer 24 is disposed at the front most surface.

In the conventional LCD panel, the polarizing films before and after the liquid crystal have the same polarizing directions with 90° differences in their polarizing directions. In the first embodiment of the present invention, new polarizing films are alternately orthogonal before and after the liquid crystal in fine stripe shapes having different polarizing directions of 90° at one plane. In the second embodiment of the present invention, the second 1/2 phase retardation film 50, the liquid crystal layer 10, the third polarizing region 33 and the fourth polarizing region 34 are sequentially engaged, and the polarizing films are integral with the above structure.

The operation according to the second embodiment of the present invention will be described. When light from the backlight unit 2 is changed to straight line polarizing light having a 90° polarizing direction while transmitting the third polarizing film 52 formed of straight line polarizing films. Next, the light transmitted the transparent unit 51 disposed at the front surface of the first transparent substrate 4 transmits the liquid crystal layer 10 and is changed to straight line polarizing light having a 90° rotated polarizing direction. The light transmits the fourth polarizing region 34 having a 0° or 45° polarizing direction, so that the viewer can view the image.

In addition, the light that transmitted the third polarizing film 52 and polarized at 90° or 135° transmits the second 1/2 phase retardation film 50 and has a 180° difference between incident light and the phase, so that the light is changed to straight line polarizing light having a 90° rotated polarizing direction, and the polarizing direction becomes 0°. The light becomes straight line polarizing light having a 90° rotated polarizing direction while transmitting the liquid crystal layer 10. Therefore, as the light transmits the third polarizing region 33 having a 90° or 135° polarizing direction, the viewer can view the image.

In the LCD panel, the transparent unit 51 and the fourth polarizing region 31 are matched with the pitches of the pixels, and the second 1/2 phase retardation film 50 and the third polarizing region 33 are matched with the pitches of the pixels. In the LCD panel, the right eye image is displayed at the odd number row, and the left eye image is displayed at the even number row. The right eye image transmits the fourth polarizing region 34, and the left eye image transmits the third polarizing region 33. Therefore, the viewer can view the 3D image using the polarizing glasses 25.

### [Third embodiment]

Figure 8 is a view of the third embodiment of the present invention, and Figure 9 is a cross sectional view of Figure 8. As shown in Figure 8, the construction of the third embodiment of the present invention is similar with the second embodiment of the present invention except for a 1/4 phase retardation film 68 that is additionally provided in this embodiment. In more detail, the light from the backlight unit 2 is changed to straight line polarizing light having 90° or 135° polarizing direction while transmitting the third polarizing film 52 formed of straight line polarizing films.

The light transmitted the transparent unit 51 disposed at the front surface of the first transparent substrate 4 is changed to straight line polarizing light having a 90° rotated polarizing direction while transmitting the liquid crystal layer 10. Thereafter, the light transmits the fourth polarizing region 34 having a °0 or 45° polarizing direction. Next, the polarized light transmits the 1/4 phase retardation film 68 and becomes a circular polarizing light. The viewer can view the image using the right eye polarizing glasses 72 of the circular polarizing glasses 70.

The light transmitted the third polarizing film 52 and polarized in straight line with 90° or 135° has a 180° angle difference between the incident light and the phase, so that the light is changed to the straight line light having a 90° rotated polarizing direction. The light is changed to have a straight line polarizing light state having a 90° rotated polarizing direction, while transmitting the liquid crystal layer 10. The light transmits the third polarizing region 33 having a 90° or 135° polarizing direction and then transmits the 1/4 phase retardation film 68 and becomes a circular polarizing state. Therefore, the viewer can view the image using the left eye circular polarizing glasses 71 of the circular polarizing glasses 70.

The transparent unit 51 and the fourth polarizing region 34 are matched with the pitches of the pixels at the LCD panel, and the second 1/2 phase retardation film 50 and the third polarizing region 33 are matched with the pitches of the pixels. The right eye image is displayed on the odd number row at the LCD panel, and the left eye image is displayed on the even number row, so that the right eye image transmits the fourth polarizing region 34, and the left eye image transmits the third polarizing region 33. Therefore, the viewer can view the 3D images using the circular polarizing glasses 70. In the present invention, the viewer can view the 3D images using the circular polarizing glasses 70 even if the viewer's head is tilted in the left or right direction.

### [Fourth embodiment]

Figures 10 and 11 shows the fourth embodiment of the present invention. The basic construction is similar with the construction of the first embodiment of the present invention. The first, second, third and fourth polarizing regions are formed in a lattice structure like the fifth, sixth, seventh, and eighth polarizing regions. In this embodiment of the present invention, a 1/4 phase retardation film 68 is further disposed. The same construction as the first embodiment will be omitted. Namely, only the fifth, sixth, seventh and eighth polarizing regions and the 1/4 phase retardation film 68 will be described.

Figure 11 is a view illustrating an optical characteristic of the polarizing region. The light outputted from the backlight transmits the fifth polarizing region 60 and is changed to a 45° rotated straight line light. When the light reaches at the seventh polarizing region 80, the light does not transmit the seventh polarizing region 80. In addition, the light transmitted the sixth polarizing region 61 is changed to a 135° rotated straight line light. When the light reaches at the eighth polarizing region 81, the light does not transmit the same.

When the above construction and principle are adapted in the construction of Figure 10, the first transparent electrode 5 and the second transparent electrode 8 are disposed between the sixth polarizing region 61 and the eighth polarizing region 81. The liquid crystal layer 10 reacts with respect to electromagnetic field applied thereto for thereby retarding light, so that the viewer can view the 3D images. Here, the fifth polarizing region 60, the sixth polarizing region 61, the seventh polarizing region 80, and the eighth polarizing region 81 have polarizing direction angle difference of 90° at the corresponding portions. In addition, the 1/4 phase retardation film 68 is additionally provided. In this case, the straight line polarizing light 25 of the first embodiment of the present invention is substituted with the circular polarizing glasses 70. Therefore, the viewer can view the 3D images even when the viewer's head is tilted in the left or right direction.

### [Fifth embodiment]

The fifth embodiment of the present invention is shown in Figure 12. Figure 13 is a cross sectional view of Figure 12. The construction is basically similar with the third embodiment of the present invention. In this embodiment, the 1/2 phase retardation film and the transparent unit and the polarizing regions are formed in a lattice shape.

As shown in Figure 12, the light from the backlight unit 2 transmits the third polarizing film 52 formed of straight line polarizing films and is changed to straight line polarizing light having 90° or 135° polarizing directions.

Next, the light transmitted the transparent unit 91 disposed at the front surface of the first transparent substrate 4 transmits the liquid crystal layer 10 and is changed to straight line polarizing light having 90° rotated polarizing direction. The light transmits the eighth polarizing region 81 having a polarizing direction of 0° or 45°. The polarized light transmits the 1/4 phase retardation film 68 and is changed to a circular polarizing state. Therefore, the viewer can see the image through the right circular polarizing glasses 72 of the circular polarizing light glasses 70.

In addition, the light polarized at an angle of 90° or 135° and transmitted the third polarizing film 52 transmits the third 1/2 phase retardation film 90 and has 180° difference between the incident light and the phase. Therefore, the light is changed into straight line polarizing light having a 90° rotated polarizing direction. This light transmits the liquid crystal layer 10 and is changed to straight line polarizing light having a 90° rotated polarizing direction. Therefore, the light can be changed to circular polarizing light while transmitting the seventh polarizing region 80 having a 135° polarizing direction and the 1/4 phase retardation film 68. Therefore, the viewer can view the images using the left eye circular polarizing glasses 71 of the circular polarizing light glasses 70.

Therefore, in the LCD panel, the transparent unit 91 and the eighth polarizing region 81 are matched with the pitches of the pixels, and the third 1/2 phase retardation film 90 and the seventh polarizing region 80 are matched with the pitches of the pixels. The right eye image is displayed at the portions of the transparent unit 91 and the eighth polarizing region 81 in the LCD panel, and the left eye image is displayed at the portions of the third 1/2 phase retardation film 90 and the seventh polarizing region 80. The right eye image transmits the eighth polarizing region 81, and the left eye image transmits the seventh polarizing region 80. Therefore, the viewer can view the 3D images using the circular polarizing light glasses 70. In addition, even when the viewer's head is tilted in the left or right direction, it is possible to view the 3D images using the circular polarizing light glasses 70.

### [Sixth embodiment]

The construction of the six embodiment of the present invention will be described with reference to Figure 14.

In the sixth embodiment of the present invention, as shown in Figure 14, the fifth polarizing region 60, the seventh polarizing region 80, and the eighth polarizing region 81 are all formed of a conductive metal. Here, the conductive metal represents an electrically conductive metal. Preferably, the conductive metal is aluminum. In the sixth embodiment of the present invention, since a conductive polarizing film is used, two transparent electrodes and two insulation layers are not needed before and after the liquid crystal layer.

The sixth embodiment of the present invention will be described in detail. Figure 14 is a view illustrating a structure of the present invention, and Figure 15 is a view illustrating an optical characteristic when the polarizing region is formed of a conductive metal, and Figure 16 is a cross sectional view of Figure 14.

The construction that the conductive metal, a major feature of the sixth embodiment of the present invention, is used for the polarizing region will be described.

As shown in Figure 15, the polarizing regions are divided into a sub pixel shape of the display like the first conductive polarizing film 100 and the second conductive polarizing film 101. In addition, the third conductive polarizing film 110 and the fourth conductive polarizing film 111 are formed of common electrodes. Here, the polarizing directions of the third conductive polarizing film 10 and the fourth conductive polarizing film 111 are orthogonal at 90°, which correspond to the first conductive polarizing film 100 and the second conductive polarizing film 101.

When the above principle is adapted to the embodiment of Figure 14, the first conductive polarizing film 100 and the second conductive polarizing film 101 formed on the plane of the first transparent substrate 4 disposed at a front surface of the backlight unit 2 are orthogonal with a 90° polarizing direction difference for thereby achieving a polarizing film function and a conventional transparent electrode function. Next to that, the first alignment film 6 is disposed, and the liquid crystal layer 10 filled with liquid crystal is disposed between the first alignment film 6 and the second alignment film 7. Here, the aligning directions of the first and second alignment films 6 and 7 may be changed depending on the kinds of the liquid crystal used. When an electromagnetic field is applied to the conductive polarizing film, the liquid crystal layer 10 is moved based on the characteristic of the liquid crystal for thereby retarding the transmitting light.

Next, the third conductive polarizing film 110 and the fourth conductive polarizing film 111 are disposed at the front surface of the second alignment film 7 with both polarizing film function and transparent electrode function. Next to that, the color filter 9 and the second transparent substrate 11 are disposed. Next, the 1/4 phase retardation film 68 is disposed, and the non-reflection coating layer 24 is disposed at the front most surface.

In this embodiment of the present invention, when the thin polarizing film is formed using a conductive metal, since there are provided both polarizing film function and electrode function, two transparent electrodes and two insulation layers are not needed before and after the liquid crystal layer as compared to the conventional LCD device, so that the fabrication process of the LCD device is simplified, and the fabrication unit cost is decreased.

As described above, in the present invention, it is possible to implement an optical structure capable of viewing 2D and 3D images without providing additional parts for 2D and 3D images.

In the optical structure of the present invention, polarizing films are disposed very near the LCD device, so that a viewing angle is not limited in upper and lower directions wherein the limited viewing angle has been a big problem in the conventional art. In addition, a viewing distance is not limited in forward and backward directions. Multiple people can concurrently view 3D images irrespective of the viewing angle or distance.

In addition, the fabrication process of the LCD device can be decreased, and the fabrication cost of the 2D and 3D LCD device can be decreased.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

A LCD device having a thin phase retardation film is disclosed, which is achieved using a thin film polarizing film formed by accurately processing a thin aluminum film, a polarizing film of a nano imprint lithography method that uses polymer, and a polarizing film and a liquid crystal material that form a polarizing nano material thin film by uniformly coating a polarizing nano material (TCF).

## Claims

1. An LCD (Liquid Crystal Display) device in which a first polarizing region (30) and a second polarizing region (31) are integrally formed at a surface of a first transparent substrate (4) disposed at a front surface of a backlight unit (2), and a liquid crystal layer (10) filled with liquid crystal is disposed between a first alignment film (6) and a second alignment film (7), and a second transparent electrode (8) and a color filter (9) are disposed at a front surface of the second alignment film (7), the LCD device having a thin polarizing film and a thin phase retardation film **characterized in that** the first polarizing region (30) having a polarizing direction of 0° or 45° and the second polarizing region (31) having a polarizing direction of 90° or 135° formed on the surface of the first transparent substrate are orthogonal from each other and are aligned on the same plane, and a first insulation layer (32) is stacked on the front surfaces of the first polarizing region (30) and the second polarizing region (31), and next to that, a first transparent electrode (5) and the first alignment film (6) are disposed, and the liquid crystal layer (10), the second alignment film (7), the second transparent electrode (8), the color filter (9) and a second insulation layer (35) are sequentially disposed, and a third polarizing region (33) and a fourth polarizing region (34) are disposed on the same plane in a structure that the polarizing directions of the same are orthogonal 90° with respect to the first polarizing region (30) and the second polarizing region (31) on the front surface, and next to that a second transparent substrate (11) is disposed, and a non-reflection coating layer (24) is disposed at the front most surface.

2. The device of claim 1, wherein a third polarizing film (52) formed of straight line polarizing films over its entire portions is disposed at a front surface of the backlight unit (2), and next to that a second 1/2 phase retardation film (50) and a transparent unit (51) are disposed at a front surface of the first transparent substrate (4) with a certain width and distance on the same plane, and next to that the first insulation layer (32) is disposed, and the first transparent electrode (5) and the first alignment film (6) are sequentially disposed at the front surface of the first insulation layer, and then the crystal layer (10), the second alignment film (7), a second transparent thin film (8), the color filter (9), and the second insulation layer are sequentially disposed, and next to that a third polarizing region and a fourth polarizing region are disposed on the same plane, and next to that the second transparent substrate (11) is disposed, and the non-reflection coating layer (24) is disposed at a front most surface.

3. The device of either claim 1 or claim 2, wherein a 1/4 phase retardation film (68) is disposed at a front surface of the second transparent substrate (11) for thereby converting an incident light into a circular polarizing light.

4. The device of either claim 1 or claim 2, wherein the aligning directions of the first alignment film (6) and the second alignment film (7) are either vertical or in the same direction at the portions corresponding to the first polarizing region (30) and the second polarizing region (31).

5. The device of either claim 1 or claim 2, wherein said thin film polarizing film is formed of an aluminum thin film or a polymer or a polarizing nano material (TCF) in a wire grid structure, and said phase retardation film is formed of a liquid crystal material.

6. The device of claim 1, in which the first transparent substrate is disposed at the front surface of the backlight unit, and a fifth polarizing region (60) having a 0° or 45° polarizing direction and a sixth polarizing region (61) having a 90° or 135° polarizing direction are integrally formed on a surface of the first transparent substrate in an orthogonal structure on the same plane, and the first insulation layer is stacked at the front surfaces of the fifth polarizing region and the sixth polarizing region, and the liquid crystal layer is disposed between the first and second alignment films, and the second transparent electrode and the color filter are disposed at the front surface of the second alignment film, and next to that the second insulation layer, a seventh polarizing region (80), an eighth polarizing region (81) and the second transparent substrate are sequentially disposed, and the non-reflection coating layer is disposed at the front most surface, a wherein the first polarizing region and the second polarizing region are integrally formed in a lattice shape, and the third polarizing region and the fourth polarizing region are disposed on the same plane in a lattice shape in a structure that the polarizing directions of the first polarizing region and the second polarizing region are orthogonal at 90°, and next to that the second transparent substrate is disposed, and a 1/4 phase retardation film (68) is disposed following the second transparent substrate.

7. The device of claim 6, wherein the polarizing films of said fifth polarizing region, said sixth polarizing region, said seventh polarizing region and said eighth polarizing region are formed of conductive polarizing films.

8. The device of claim 2, in which the third polarizing film formed of straight line polarizing films is disposed at the front surface of the backlight unit over its entire portions, and next to that a third 1/2 phase retardation film (90) and a transparent unit (91) are aligned at a front surface of the first transparent substrate, and next to that the first insulation layer is provided, and the first transparent electrode and the first alignment film are sequentially aligned at the front surface of the first insulation layer, and the liquid crystal layer is disposed between the first alignment film and the second alignment film, and the second transparent electrode, the color filter and the second insulation layer are sequentially disposed at the front surface of the second alignment film, and next to that a seventh polarizing region (80), an eighth polarizing region (81) and the second transparent substrate are sequentially disposed, and the non-reflection coating layer is disposed at a front most surface, wherein the third 1/2 phase retardation film and the transparent unit are aligned in a lattice shape on the same plane, and the seventh polarizing region and the eighth polarizing region are integrally formed in a lattice shape on the same plane, and next to that the second transparent substrate is disposed, and a 1/4 phase retardation film (68) is disposed next to the second transparent substrate for converting an incident light into a circular polarizing light.

## Patentansprüche

1. LCD- (Flüssigkristallanzeige-) Vorrichtung, bei welcher ein erster Polarisationsbereich (30) und ein zweiter Polarisationsbereich (31) integral an einer Oberfläche eines an einer Vorderfläche einer Rücklichteinheit (2) angeordneten ersten transparenten Substrats (4) ausgebildet sind, und eine mit flüssigem Kristall gefüllte Flüssigkristallschicht (10) zwischen einer ersten Ausrichtungsfolie (6) und einer zweiten Ausrichtungsfolie (7) angeordnet ist, und eine zweite transparente Elektrode (8) und ein Farbfilter (9) an einer Vorderfläche der zweiten Ausrichtungsfolie (7) angeordnet sind, wobei die LCD-Vorrichtung eine dünne Polarisationsfolie und eine dünne Phasenverzögerungsfolie aufweist, **dadurch gekennzeichnet, dass** der erste Polarisationsbereich (30) mit einer Polarisationsrichtung von 0° oder 45° und der zweite Polarisationsbereich (31) mit einer Polarisierungsrichtung von 90° oder 135°, welche auf der Oberfläche des ersten transparenten Substrats ausgebildet sind, orthogonal zueinander sind und auf derselben Ebene ausgerichtet sind, und eine erste Isolationsschicht (32) auf den Vorderflächen des ersten Polarisationsbereichs (30) und des zweiten Polarisationsbereichs (31) aufgeschichtet ist, und als nächstes dazu eine erste transparente Elektrode (5) und die erste Ausrichtungsfolie (6) angeordnet sind, und die Flüssigkristallschicht (10), die zweite Ausrichtungsfolie (7), die zweite transparente Elektrode (8), das Farbfilter (9) und eine zweite Isolationsschicht (35) sequentiell angeordnet sind, und ein dritter Polarisationsbereich (33) und ein vierter Polarisationsbereich (34) auf derselben Ebene in einer Struktur angeordnet sind, dass die Polarisationsrichtungen von denselben 90° bezüglich des ersten Polarisationsbereichs (30) und des zweiten Polarisationsbereichs (31) auf der Vorderfläche orthogonal sind, und als nächstes dazu ein zweites transparentes Substrat (11) angeordnet ist, und eine Nicht-Reflexionsüberzugsschicht (24) an der vordersten Oberfläche angeordnet ist.

2. Vorrichtung nach Anspruch 1, wobei eine dritte Polarisationsfolie (52), welche aus geradlinigen Polarisationsfolien über deren gesamten Abschnitten gebildet ist, an einer Vorderfläche der Rücklichteinheit (2) angeordnet ist, und als nächstes dazu eine zweite 1/2- Phasenverzögerungsfolie (50) und eine transparente Einheit (51) an einer Vorderfläche des ersten transparenten Substrats (4) mit einer bestimmten Breite und einem bestimmten Abstand auf derselben Ebene angeordnet sind, und als nächstes dazu die erste Isolationsschicht (32) angeordnet ist, und die erste transparente Elektrode (5) und die erste Ausrichtungsfolie (6) sequentiell an der Vorderfläche der ersten Isolationsschicht angeordnet sind, und dann die Kristallschicht (10), die zweite Ausrichtungsfolie (7), eine zweite transparente dünne Folie (8), das Farbfilter (9) und die zweite Isolationsschicht sequentiell angeordnet sind, und als nächstes dazu ein dritter Polarisationsbereich und ein vierter Polarisationsbereich auf derselben Ebene angeordnet sind, und als nächstes dazu das zweite transparente Substrat (11) angeordnet ist, und die Nicht-Reflexionsüberzugsschicht (24) an einer vordersten Oberfläche angeordnet ist.

3. Vorrichtung nach Anspruch 1 oder Anspruch 2, wobei eine 1/4- Phasenverzögerungsfolie (68) an einer Vorderfläche des zweiten transparenten Substrats (11) angeordnet ist, um dabei ein einfallendes Lichtbündel in ein zirkular polarisiertes Lichtbündel umzuwandeln.

4. Vorrichtung nach Anspruch 1 oder Anspruch 2, wobei die Ausrichtungsrichtungen der ersten Ausrichtungsfolie (6) und der zweiten Ausrichtungsfolie (7) entweder vertikal oder in derselben Richtung an den Abschnitten sind, welche dem ersten Polarisationsbereich (30) und dem zweiten Polarisationsbereich (31) entsprechen.

5. Vorrichtung nach Anspruch 1 oder Anspruch 2, wobei die Dünnfilm-Polarisationsfolie aus einem Aluminium-Dünnfilm oder einem Polymer oder einem polarisierenden Nanomaterial (TCF) in einer Drahtgitterstruktur gebildet ist und die Phasenverzögerungsfolie aus einem Flüssigkristallmaterial gebildet ist.

6. Vorrichtung nach Anspruch 1, in welcher das erste transparente Substrat an der Vorderfläche der Rücklichteinheit angeordnet ist, und ein fünfter Polarisationsbereich (60), der eine 0° oder 45° Polarisationsrichtung aufweist, und ein sechster Polarisationsbereich (61), der eine 90° oder 135° Polarisationsrichtung aufweist, integral auf einer Oberfläche des ersten transparenten Substrats in einer orthogonalen Struktur auf derselben Ebene ausgebildet sind, und die erste Isolationsschicht an den Vorderflächen des fünften Polarisationsbereichs und des sechsten Polarisationsbereichs aufgeschichtet ist, und die Flüssigkristallschicht zwischen der ersten und zweiten Ausrichtungsfolie angeordnet ist, und die zweite transparente Elektrode und das Farbfilter an der Vorderfläche der zweiten Ausrichtungsfolie angeordnet sind, und als nächstes dazu die zweite Isolationsschicht, ein siebter Polarisationsbereich (80), ein achter Polarisationsbereich (81) und das zweite transparente Substrat sequentiell angeordnet sind, und die Nicht-Reflexionsüberzugsschicht an der vordersten Oberfläche angeordnet ist, wobei der erste Polarisationsbereich und der zweite Polarisationsbereich integral in einer Gitterform ausgebildet sind, und der dritte Polarisationsbereich und der vierte Polarisationsbereich auf derselben Ebene in einer Gitterform in einer Struktur angeordnet sind, dass die Polarisationsrichtungen des ersten Polarisationsbereichs und des zweiten Polarisationsbereichs orthogonal bei 90° sind, und als nächstes dazu das zweite transparente Substrat angeordnet ist, und eine 1/4- Phasenverzögerungsfolie (68) nachfolgend zu dem zweiten transparenten Substrat angeordnet ist.

7. Vorrichtung nach Anspruch 6, wobei die Polarisationsfolien des fünften Polarisationsbereichs, des sechsten Polarisationsbereichs, des siebten Polarisationsbereichs und des achten Polarisationsbereichs aus leitfähigen Polarisationsfolien gebildet sind.

8. Vorrichtung nach Anspruch 2, in welcher die aus geradlinigen Polarisationsfolien gebildete dritte Polarisationsfolie an der Vorderfläche der Rücklichteinheit über ihren gesamten Abschnitten angeordnet ist, und als nächstes dazu eine dritte 1/2- Phasenverzögerungsfolie (90) und eine transparente Einheit (91) an einer Vorderfläche des ersten transparenten Substrats ausgerichtet sind, und als nächstes dazu die erste Isolationsschicht vorgesehen ist, und die erste transparente Elektrode und die erste Ausrichtungsfolie sequentiell an der Vorderfläche der ersten Isolationsschicht ausgerichtet sind, und die Flüssigkristallschicht zwischen der ersten Ausrichtungsfolie und der zweiten Ausrichtungsfolie angeordnet ist, und die zweite transparente Elektrode, das Farbfilter und die zweite Isolationsschicht sequentiell an der Vorderfläche der zweiten Ausrichtungsfolie angeordnet sind, und als nächstes dazu ein siebter Polarisationsbereich (80), ein achter Polarisationsbereich (81) und das zweite transparente Substrat sequentiell angeordnet sind, und die Nicht-Reflexionsüberzugsschicht an einer vordersten Oberfläche angeordnet ist, wobei die dritte 1/2- Phasenverzögerungsfolie und die transparente Einheit in einer Gitterform auf derselben Ebene angeordnet sind, und der siebte Polarisationsbereich und der achte Polarisationsbereich integral in einer Gitterform auf derselben Ebene ausgebildet sind, und als nächstes dazu das zweite transparente Substrat angeordnet ist, und eine 1/4-Phasenverzögerungsfolie (68) als nächstes zu dem zweiten transparenten Substrat angeordnet ist, um ein einfallendes Lichtbündel in ein zirkular polarisiertes Lichtbündel umzuwandeln.

## Revendications

1. Dispositif de LCD (Liquid Crystal Display ; affichage à cristaux liquides) dans lequel une première région de polarisation (30) et une seconde région de polarisation (31) sont formées intégralement au niveau d'une surface d'un premier substrat transparent (4) disposé au niveau d'une surface avant d'une unité de rétroéclairage (2) et une couche de cristaux liquides (10) remplie avec un cristal liquide est disposée entre un premier film d'alignement (6) et second un film d'alignement (7), et une seconde électrode transparente (8) ainsi qu'un filtre de couleur (9) sont disposés au niveau d'une surface avant du second film d'alignement (7), le dispositif de LCD comportant un film polarisant mince et un film à retard de phase mince **caractérisé en ce que** la première région de polarisation (30) présentant une direction de polarisation de 0° ou de 45° et la seconde région de polarisation (31) présentant une direction de polarisation de 90° ou de 135° formées sur la surface du premier substrat transparent sont orthogonales l'une par rapport à l'autre et sont alignées sur le même plan, et une première couche d'isolation (32) est empilée sur les surfaces avant de la première région de polarisation (30) et de la seconde région de polarisation (31), et par ailleurs, une première électrode transparente (5) ainsi que le premier film d'alignement (6) sont disposés, et la couche de cristaux liquides (10), le second films d'alignement (7), la seconde électrode transparente (8), le filtre de couleur (9) ainsi qu'une seconde couche d'isolation (35) sont disposés séquentiellement, et une troisième région de polarisation (33) ainsi qu'une quatrième région de polarisation (34) sont disposées sur le même plan en une structure dans laquelle les directions de polarisation de celles-ci sont orthogonales à 90° par rapport à la première région de polarisation (30) et à la seconde région de polarisation (31) sur la surface avant, et par ailleurs, un second substrat transparent (11) est disposé, et une couche de revêtement antiréfléchissant (24) est disposée au niveau de la surface la plus en avant.

2. Dispositif selon la revendication 1, dans lequel un troisième film polarisant (52) formé de films de polarisation rectiligne sur l'ensemble de ses portions est disposé au niveau d'une surface avant de l'unité de rétroéclairage (2), et par ailleurs un second film à retard de ½ phase (50) ainsi qu'une unité transparente (51) sont disposés au niveau d'une surface avant du premier substrat transparent (4) selon une certaine largeur et une certaine distance sur le même plan, et par ailleurs la première couche d'isolation (32) est disposée et la première électrode transparente (5) ainsi que le premier film d'alignement (6) sont disposés séquentiellement au niveau de la surface avant de la première couche d'isolation, et ensuite la couche de cristaux liquides (10), le second film d'alignement (7), un second film mince transparent (8), le filtre de couleur (9) ainsi que la seconde couche d'isolement sont disposés séquentiellement, et par ailleurs une troisième région de polarisation ainsi qu'une quatrième région de polarisation sont disposées sur le même plan, et par ailleurs le second substrat transparent (11) est disposé, et une couche de revêtement antiréfléchissant (24) est disposée au niveau d'une surface la plus en avant.

3. Dispositif selon l'une ou l'autre des revendications 1 ou 2, dans lequel un film à retard de ¼ de phase (68) est disposé au niveau d'une surface avant du second substrat transparent (11) pour ainsi convertir une lumière incidente en une lumière de polarisation circulaire.

4. Dispositif selon l'une ou l'autre des revendications 1 ou 2, dans lequel les directions d'alignement du premier film d'alignement (6) et du second film d'alignement (7) sont soit verticales, soit dans la même direction au niveau des portions correspondant à la première région de polarisation (30) et à la seconde région de polarisation (31).

5. Dispositif selon l'une ou l'autre des revendications 1 ou 2, dans lequel ledit film polarisant de film mince est formé d'un film mince d'aluminium ou d'un polymère ou d'un nanomatériau polarisant (TCF) selon une structure de grille de fils, et ledit film à retard de phase est formé d'un matériau à cristaux liquides.

6. Dispositif selon la revendication 1, dans lequel le premier substrat transparent est disposé au niveau de la surface avant de l'unité de rétroéclairage, et une cinquième région de polarisation (60) présentant une direction de polarisation de 0° ou de 45° ainsi qu'une sixième région de polarisation (61) présentant une direction de polarisation de 90° ou de 135° sont formées intégralement sur une surface du premier substrat transparent selon une structure orthogonale sur le même plan, et la première couche d'isolation est empilée au niveau des surfaces avant de la cinquième région de polarisation ainsi que de la sixième région de polarisation, et la couche de cristaux liquides est disposée entre les premier et second films d'alignement, et la seconde électrode transparente ainsi que le filtre de couleur sont disposés au niveau de la surface avant du second film d'alignement, et par ailleurs la seconde couche d'isolation, une septième région de polarisation (80), une huitième région de polarisation (81) ainsi que le second substrat transparent sont disposés séquentiellement, et la couche de revêtement antiréfléchissant est disposée au niveau de la surface la plus en avant, et dans lequel la première région de polarisation ainsi que la seconde région de polarisation sont formées intégralement selon une forme de réseau, et la troisième région de polarisation ainsi que la quatrième région de polarisation sont disposées dans le même plan selon une forme de réseau en une structure selon laquelle les directions de polarisation de la première région de polarisation et de la seconde région de polarisation sont orthogonales à 90°, et par ailleurs le second substrat transparent, ainsi qu'un film à retard de ¼ de phase (68) est disposé à la suite du second substrat transparent.

7. Dispositif selon la revendication 6, dans lequel les films polarisants de ladite cinquième région de polarisation, de ladite sixième région de polarisation, de ladite septième région de polarisation et de ladite huitième région de polarisation sont formés de film polarisants conducteurs.

8. Dispositif selon la revendication 2, dans lequel le troisième film polarisant formé de films de polarisation rectiligne est disposé au niveau de la surface avant de l'unité de rétroéclairage sur l'ensemble de ses portions, et par ailleurs un troisième film à retard de ½ phase (90) ainsi qu'une unité transparente (91) sont alignés au niveau d'une surface avant d'un premier substrat transparent, et par ailleurs la première couche d'isolation est prévue, et la première électrode transparente ainsi que le premier film d'alignement sont alignés séquentiellement au niveau de la surface avant de la première couche d'isolation, et la couche de cristaux liquides est disposée entre le premier film d'alignement et le second film d'alignement, et la seconde électrode transparente, le filtre coloré ainsi que la seconde couche d'isolation sont disposés séquentiellement au niveau de la surface avant du second film d'alignement, et par ailleurs une septième région de polarisation (80), une huitième région de polarisation (81 ainsi que le second substrat transparent sont disposés séquentiellement, et la couche de revêtement antiréfléchissant est disposée au niveau d'une surface la plus en avant, dans lequel le film à retard de ½ phase et l'unité transparente sont alignés selon une forme de réseau sur le même plan, et la septième région de polarisation ainsi que la huitième région de polarisation sont formées intégralement selon une forme de réseau sur le même plan, et par ailleurs le second substrat transparent est disposé, et un film à retard de ¼ de phase (68) est disposé à côté du second substrat transparent pour convertir une lumière incidente en une lumière de polarisation circulaire.
